# EUROPEAN PATENT SPECIFICATION

(11) **EP 1 674 141 B1**
(45) Date of publication and mention of the grant of the patent: **22.06.2011**
(21) Application number: 05380072.8
(22) Date of filing: 14.04.2005
(51) Int. Cl.: B01D 17/025, B01D 17/04, B01D 17/12, B01D 17/032, B01D 17/028, B01D 17/02, B01D 61/20, B01D 61/22

(54) **Phisically and chemically emulsified hydrocarbon water separator for ships' bilges**
Physisch und chemisch emulgierter Kohlenwasserstoff -Wasserabscheider für Schiffsräume
Séparateur d'eau et d'hydrocarbure émulsifié d'une manière physique et chimique, pour fonds de cales de bateaux

(30) Priority: 22.12.2004 ES 200403051
(43) Date of publication of application: 28.06.2006
(73) Proprietor: Facet Ibérica, S.A., 15142 Arteixo (A Coruna) (ES)
(72) Inventor: Vázquez Pérez, Camilo, 15142 Arteixo (A Coruna) (ES); Saavedra Pereira, José, 15142 Arteixo (A Coruna) (ES)
(74) Representative: Pons Ariño, Angel

(56) References cited:
- EP-A- 1 332 791
- US-A- 3 878 094
- US-A- 5 679 258

## Description

### OBJECT OF THE INVENTION

The present invention, as it is expressed in this descriptive report, refers to an emulsion separator equipment, especially constructed to separate physically and chemically emulsified hydrocarbons in water, allowing not only the separation of free hydrocarbon from a water stream, but also emulsified hydrocarbon on the basis of the combination of two separation techniques: on the one hand, the gravimetric separation by means of FACET Mpak coalescent plates and, on the other hand, the separation through cross-flow emulsion breaker membranes.

This equipment is automatic, operated electrically and self- supported in its own bedplate. Its field of application is extensive to most industries, in all those cases and practical circumstances in which it is necessary to separate mixtures of hydrocarbon or mineral oil and water, for example, water.

### BACKGROUND OF THE INVENTION

When in a water-hydrocarbon mixture it becomes necessary to make a separation of emulsions, the most widespread separation process is based on pH modification, in order to break emulsions through the insertion of acid and/or basic components. This process allows the separation of hydrocarbon from water.

The drawback that arises from this kind of processes lays on the measurement of the reagents, since the quantity of each of these reagents will be proportioned to the components and pH of the sample to be separated, requiring expensive regulation and maintenance systems.

In the Spanish patent P200200951 from the same applicant, a physically and chemically emulsified hydrocarbon water separator is described, by means of which, the aforementioned drawback is solved.

Said emulsified hydrocarbon water separator is based on the combination of two technologies, one of them corresponds to the gravimetric separation of free hydrocarbon from water, and the other one corresponds to a process of ultrafiltration through membranes, to separate the emulsified hydrocarbon. The gravimetric separation unit includes a pack of FACET Mpak coalescent plates, whereas the ultrafiltration unit includes a series of membranes through which the fluid flows, released from free hydrocarbon previously separated in the gravimetric unit.

The separator as a whole, includes a suction pump to run in the fluid or hydrocarbon water mixture in the gravimetric separation unit. The separator also consists of an impeller pump to push the water coming from the previous unit, and a third pump to expel the hydrocarbon separated within the gravimetric unit, towards the collecting tank.

The separator also includes a detector for the hydrocarbon accumulated in the upper part of the gravimetric unit, as well as some valves that operate allowing or blocking the pass of the fluid and hydrocarbons towards it corresponds in each moment, being everything managed by a control panel.

### DESCRIPTION OF THE INVENTION

The separator, subject of the invention, is based on the one referred to in the previous section, that is, on the one described in the patent P200200951, but with a series of innovations which derive in higher effectiveness and performance of the separation process.

In accordance with the invention, the separator keeps the gravimetric separation unit described in the patent P-200200951, whereas the emulsions are eliminated by means of a cross-flow emulsion breaker membrane at low pressure. This means that in the first stage of the process, the coalescent plates of the gravimetric unit eliminate or separate all free hydrocarbon from water, in the same way as in the above commented patent, while in the second stage a separation of the emulsified hydrocarbon is obtained by means of an emulsion breakdown and a later gravimetric separation.

Another characteristic of the separator is the incorporation of a clean water input valve, which starts operating when the suction pump for the water mixture is deactivated, and therefore the inlet of fluid into the gravimetric separation unit stops. The deactivation of the suction pump will take place depending on the quantity of hydrocarbon accumulated. The clean water input valve with which the equipment has been fitted, is aimed at discharging the separated hydrocarbons towards their respective collecting or storage tanks.

As an alternative, it is possible to include a suction pump in the hydrocarbon outlet pipe, which would allow their discharge. In this case, the impulsion of clean water would not be necessary for the discharge of hydrocarbons.

Another innovation of this invention is the placement of a conduit between both separation units, through which the hydrocarbon separated in the cross-flow emulsion breaker membrane unit is sent to the gravimetric separation unit.

Another feature that brings novelty to this model is the incorporation of an automatic valve in the conduit through which hydrocarbon-free water is pumped, from the gravimetric separation unit to the emulsion breaker membrane unit. The automatic valve of this unit operates for avoiding a needless use of membranes when in practice there are not any emulsions but free hydrocarbons. A sensor provides the information regarding the existing quantity of hydrocarbon in water and according to it, the fluid is carried from the outlet of the gravimetric separation unit collecting tank, to the treated water outlet pipe, from the cross-flow emulsion breaker membrane unit, without passing through the collecting tank or storage deposit of such unit.

A safety device has been also included to avoid the discharge of contaminated water due to failures in the equipment, so that if the amount of hydrocarbon is higher than the established one under regulations, the fluid or treated water is taken to the collector or hydrocarbon water inlet tank by means of a different conduit, to be treated again.

It has been also planned that the emulsion breaker membrane is connected to a high pressure sensor, which makes the equipment stop when pressure in the membrane does not guarantee the quality of the effluent. In this case, the sensor emits a signal to the control panel, and this one to the impeller_pump, warning of the change of membrane.

The cross-flow emulsion breaker membrane is aimed at breaking the hydrocarbon emulsions in water and generating hydrocarbon drops from those micro drops emulsified that enter the emulsion breaker membrane, without using any chemical product for that emulsion breakdown.

This equipment also includes a series of valves, pipes, hydrocarbon meters, an alarm for the change of membranes, and optionally, flow meters, pressure and temperature transmitters, drainage meters, sluiceways and collecting conduits for the separated products.

The equipment operates automatically and is regulated by a control panel, which determines the starting/stop of the electrical pumps, as well as the opening/closing of the valves according to the signals received by the sensors or hydrocarbon detectors, and/or by an analyser of hydrocarbon in water - part of the equipment as well.

The separator is valid for both, those applications consisting in pouring purified water into the gravimetric unit, with a content of hydrocarbon lower than the established one under current regulations, and for those applications consisting in the treatment of separated hydrocarbons.

### BRIEF DESCRIPTION OF THE DRAWINGS

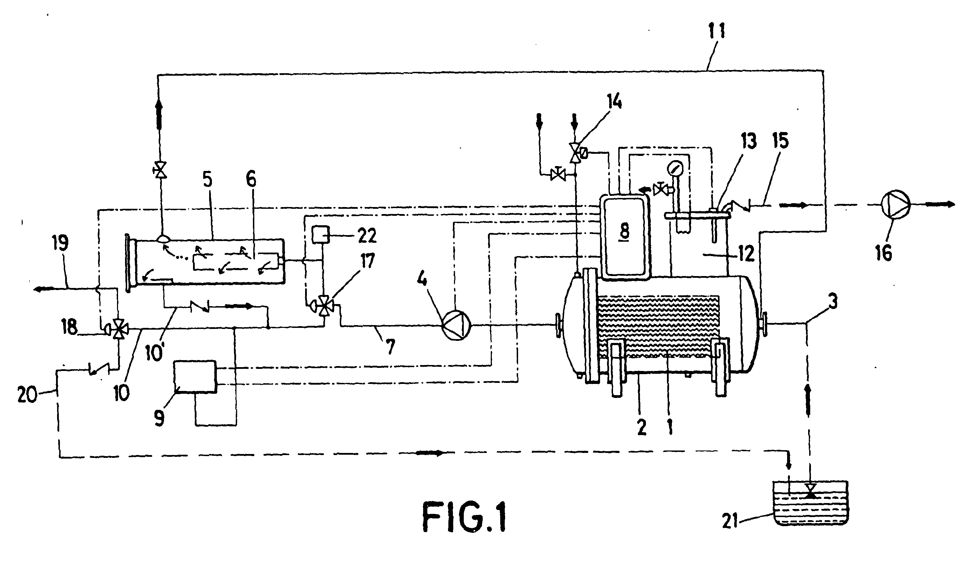

As a complement to the following description, and with the aim of obtaining a better comprehension of the features of this invention, a sheet of drawings (Figure 1) has been enclosed, representing schematically how the emulsion breaker separation unit has been manufactured in accordance with the subject of the invention.

### DESCRIPTION OF AN EMBODIMENT OF THE INVENTION

In view of the aforementioned figure, it can be observed how the emulsion separator, subject of the invention, is based on the combination of two different separation technologies: the gravimetric separation technology and the one using cross-flow emulsion breaker membranes.

To be precise, the gravimetric separation unit (1) is located in a reception tank (2), which receives the hydrocarbon water mixture, that is, the fluid, through a conduit (3), and includes a Facet Mpack Coalescent Plates Pack, which makes up the separation unit. The fluid or hydrocarbon water mixture is sucked up by a pump (4) located in a conduit (7) which communicates the above mentioned reception tank (2) of the gravimetric separation unit (1) with the cross-flow emulsion breaker separation unit (5). The cross-flow emulsion breaker separation unit (5) includes one or some emulsion breaker membrane(s) (6) at low pressure.

The water mixture coming from the gravimetric separation unit (1), and therefore exempt from free hydrocarbon, is pushed by the pump (4) through the conduit (7), towards the aforementioned emulsion breaker membrane unit (5) .

The separator also includes a control panel (8), that regulates the operation of all the components and devices that will be described throughout the present report, as well as the hydrocarbon meter (9) placed in the branch or outlet conduit (10), for the water already free from hydrocarbons, in a way that between this branch line (10) and the emulsion breaker separation unit (5), there is a line (10') that reaches the separation unit (5).

With regard to the free and separated hydrocarbons obtained from the above mentioned emulsion breaker membrane unit (5), enter a common collector (11), to be driven to the gravimetric separation unit (1), and be collected in its upper part (12), from where they are discharged through the conduit (15).

According to the above mentioned, the separator operates as follows.
The hydrocarbon water mixture to be treated, that is, the fluid, is sucked through the suction pipe (3) by the pump (4), and introduced in the reception tank (2) of the gravimetric separation unit (1). This mixture of water with hydrocarbons goes through the FACET Mpak Coalescent Plates of this unit (1), so that due to the existing laminar flow in these coalescent plates, the separation of hydrocarbon from water takes place there, and due to the lower weight of hydrocarbons, they are accumulated in the top part (12), where a phase detector (13) has been provided to determine the quantity of hydrocarbon accumulated in this part (12).

When the quantity of free hydrocarbon exceeds the maximum established value, the phase detector (13), emits a signal to the control panel (8), carrying out the following operation:
The impeller pump (4) stops, therefore detaining the inlet of hydrocarbon water mixture into the reception tank (2). Simultaneously, an automatic valve (14), named "clean water inlet automatic valve" opens, allowing the intake of pressure water into the separation unit (1), pushing the hydrocarbon accumulated in the receptacle (12), and making it go out through the conduit (15) for its definite collection. As an alternative, instead of pumping fresh water by using the valve (14), a pump (16) can be placed in the outlet pipe (15), to push the hydrocarbon accumulated in the receptacle (12) towards the hydrocarbon collector or reception tank.

Once the hydrocarbon has been removed from the gravimetric separation unit (1), the phase detector (13) detects the presence of water, sending a signal to the control panel (8), which closes the clean water inlet automatic valve (14), or in its case, it stops the hydrocarbon pump (16), at the same time that the suction pump re-starts, leaving the separator in its standard operative situation.

On the other hand, the water mixture without free hydrocarbon, coming from the gravimetric separation unit (1), goes through the pump (4) to the tank of the emulsion breaker membrane separation unit (5), and when the fluid flows through the membranes (6) of the separation unit (5), it breaks the emulsion of hydrocarbons in water. Therefore hydrocarbon drops generated from the micro-drops emulsified in the mixture or inlet fluid in the membrane (6) are driven through the collecting pipe (11), towards the entrance of the tank (2) of the gravimetric separation unit (1). This hydrocarbon is accumulated in the receptacle (12) for its later discharge through the line (15).

The water without free or emulsified hydrocarbons is driven from the tank of the separation unit (5) outwards, through the line (10'), and from this one to the common outlet line (10').

In order to avoid the unnecessary use of the membranes, whenever in practice there are no emulsions but only free hydrocarbons, an automatic valve (17) has been provided so that, depending on the hydrocarbon reading carried out by means of the hydrocarbon meter (9), water is driven from the exit of the tank (2) of the separation unit (1), to the outlet line (10) without passing through the separation unit (5). Whenever emulsions appear in water in the outlet side of the tank (2) or the separation unit (1), water is driven towards the separation unit (5) in the same way as above mentioned.

A safety device has been also provided to avoid contaminated discharges due to failures in the unit, so if the quantity of hydrocarbon in water measured by the hydrocarbon meter (9) is higher than the established one under regulations, the automatic valve (18) carries water through the line (20) towards the collector or hydrocarbon water inlet tank (21) to re-treat it, otherwise water is carried outwards through the conduit (19).

Finally, it is important to add that a pressure sensor (22) connected to the cross-flow emulsion breaker membrane separation unit (5) has been provided to make the equipment stop when pressure in the membrane does not guarantee the quality of the effluent, the sensor (22) will send a signal to the control panel (8), stopping the suction pump (4) and emitting an alarm to warn of the change of membrane.

## Claims

1. PHYSICALLY AND CHEMICALLY EMULSIFIED HYDROCARBON WATER SEPARATOR FOR SHIPS' BILGES, constructed to separate independently both free hydrocarbon and physically and/or chemically emulsified hydrocarbon in a mixture of hydrocarbon water, comprising two separation units, the first separation unit being a gravimetric separation unit with coalescent plates to separate free hydrocarbon from a hydrocarbon water mixture, whereas the second separation unit is constructed to separate the emulsified hydrocarbon, including a suction pump for the hydrocarbon water mixture to be introduced, by means of a pipe, into the corresponding tank of the gravimetric separation unit; **characterized in that** the separation of the emulsified hydrocarbon is accomplished by means of a separation unit (5) with a cross-flow emulsion breaker membrane (6), which generates hydrocarbon drops from emulsified drops that enter in said emulsion breaker membrane, without the need of using any chemical product for that emulsion breakdown; a pipe (11) being provided to carry the hydrocarbon separated in the emulsion breaker membrane unit (5) to the gravimetric separation unit (1), provided with a receptacle (12) on its top side, where hydrocarbon arrives to be discharged later, said hydrocarbon being pumped by the pressure supplied by the suction pump (4); further comprising an automatic valve (17) for the fluid to pass from the gravimetric separation unit (1) to the emulsion breaker membrane unit (5), and from this one to the outlet pipe (10) through the conduit (10'), both of water without free or emulsified hydrocarbons; a hydrocarbon discharge system being also provided, accomplished by means of a clean pressure water inlet valve (14) and a phase sensor (13).

2. PHYSICALLY AND CHEMICALLY EMULSIFIED HYDROCARBON WATER SEPARATOR FOR SHIPS' BILGES, according to claim 1, is **characterized in that** the clean pressure water inlet valve (14) is replaceable by an extraction pump (16), being provided in the respective hydrocarbon outlet pipe (15), from the receptacle (12) located on the top side of the tank (2), corresponding to the gravimetric separation unit (1).

3. PHYSICALLY AND CHEMICALLY EMULSIFIED HYDROCARBON WATER SEPARATOR FOR SHIPS' BILGES, according to the previous claims, **characterized in that** an automatic valve (18) has been provided in the outlet pipe for water without free or emulsified hydrocarbons (10), by means of which the discharges contaminated due to failures in the equipment, are driven through the pipe (20) to a collector or tank (21) for hydrocarbon water, to be re-treated again on the basis of the reading supplied by a hydrocarbon meter (9) in water.

4. PHYSICALLY AND CHEMICALLY EMULSIFIED HYDROCARBON WATER SEPARATOR FOR SHIPS' BILGES, according to the previous claims, **characterized in that** an automatic valve (17) has been provided in the outlet pipe (7) of the gravimetric separation unit (1) which, depending on the existence of hydrocarbon emulsions in water, carries the fluid to the separation unit (5) with cross-flow emulsion breaker membrane (6), or carries the fluid outwards through the conduit for water without free or emulsified hydrocarbons (10).

## Patentansprüche

1. ABSCHEIDER FÜR PHYSISCH UND CHEMISCH EMULGIERTEN KOHLENWASSERSTOFF VON WASSER FÜR SCHIFFSBILGE, konstruiert zur unabhängigen Abscheidung von freiem Kohlenwasserstoff, sowie von physisch und/oder chemisch emulgiertem Kohlenwasserstoff in einem Gemisch von Kohlenwasserstoff von Wasser, bestehend aus zwei Abscheideeinheiten, wobei die erste Abscheideeinheit eine gravimetrische Abscheideeinheit mit Koaleszenzplatten zur Abscheidung von freiem Kohlenwasserstoff von einem Kohlenwasserstoff-Wasser-Gemisch ist, wobei die zweite Abscheideeinheit konstruiert ist, um den emulgierten Kohlenwasserstoff abzuscheiden, einschließlich einer Absaugpumpe für das Kohlenwasserstoff-Wasser-Gemisch, das über ein Rohres in den entsprechenden Tank der gravimetrischen Abscheideeinheit einzuführen ist; **dadurch gekennzeichnet, dass** die Abscheidung des emulgierten Kohlenwasserstoffes mittels der Abscheideeinheit (5) mit einer Querstrom-Emulsions-Zerlege-Membran (6) erreicht wird, welche Kohlenwasserstofftropfen von den emulgierten Tropfen erzeugt, die in die besagte Emulsions-Zerlege-Membran eintreten, wobei die Verwendung eines chemischen Produktes für diese Emulsionzerlegung nicht erforderlich ist; wobei ein Rohr (11) vorgesehen ist, um den Kohlenwasserstoff, der in der Emulsions-Zerlege-Membran-Einheit (5) abgeschieden wurde, zu der gravimetrischen Abscheideeinheit (1) zu leiten, welche mit einem Aufnahmebehälter (12) auf ihrer Oberseite ausgestattet ist, wo der Kohlenwasserstoff ankommt, um dann später abgelassen zu werden, wobei der besagte Kohlenwasserstoff durch den Druck der von der Absaugpumpe (4) erzeugt wird, gepumpt wird; wobei ferner ein automatisches Ventil (17) umfasst ist, damit die Flüssigkeit von der gravimetrischen Abscheideeinheit (1) zur Emulsions-Zerlege-Membran-Einheit (5) geleitet wird, und von dort aus zu dem Ableitungsrohr (10) über die Leitung (10'), das Wasser ohne freien oder emulgierten Kohlenwasserstoff; wobei auch ein Kohlenwasserstoff-Ablass-System vorgesehen ist, ausgeführt mit einem Einlassventil (14) für reines Druckwasser und einem Phasensensor (13).

2. ABSCHEIDER FÜR PHYSISCH UND CHEMISCH EMULGIERTEN KOHLENWASSERSTOFF VON WASSER FÜR SCHIFFSBILGE nach Anspruch 1, **dadurch gekennzeichnet, dass** das Einlassventil (14) für das reine Druckwasser durch eine Extraktionspumpe (16) ersetzt werden kann, welche in dem jeweiligen Kohlenwasserstoff-Ableitungsrohr (15) vorgesehen ist, von dem Aufnahmebehälter (12), der sich auf der Oberseite des Tanks (2) befindet, entsprechend der gravimetrischen Abscheideeinheit (1).

3. ABSCHEIDER FÜR PHYSISCH UND CHEMISCH EMULGIERTEN KOHLENWASSERSTOFF VON WASSER FÜR SCHIFFSBILGE nach einem der vorhergehenden Ansprüche, **dadurch gekennzeichnet, dass** in dem Ableitungsrohr ein automatisches Ventil (18) vorgesehen ist, für das Wasser ohne freie oder emulgierte Kohlenwasserstoffe (10), durch welches der kontaminierte Abfluss aufgrund von Fehlern der Ausrüstung durch das Rohr (20) zu einem Auffangbehälter oder Tank (21) für Kohlenwasserstoff von Wasser geleitet wird, um erneut behandelt zu werden auf der Basis von den Messwerte durch ein Kohlenwasserstoff-Meter (9) im Wasser bereit gestellt werden.

4. ABSCHEIDER FÜR PHYSISCH UND CHEMISCH EMULGIERTEN KOHLENWASSERSTOFF VON WASSER FÜR SCHIFFSBILGE nach einem der vorhergehenden Ansprüche, **dadurch gekennzeichnet, dass** in dem Ableitungsrohr (7) der gravimetrischen Abscheideeinheit (1) ein automatisches Ventil (17) vorgesehen wurde, welches in Abhängigkeit von dem Vorhandensein von Kohlenwasserstoff-Emulsionen im Wasser, die Flüssigkeit zu der Abscheideeinheit (5) mit einer Querstrom-Emulsions-Zerlege-Membran (6) leitet, oder die Flüssigkeit über die Leitung für Wasser ohne freie oder emulgierte Kohlenwasserstoffe (10), nach draußen leitet.

## Revendications

1. SÉPARATEUR PHYSICO-CHIMIQUE D'HYDROCARBURES ÉMULSIONNÉS-EAU POUR CALES DE NAVIRES, construit pour séparer de façon indépendante l'hydrocarbure libre et l'hydrocarbure physiquement et/ou chimiquement émulsionné dans un mélange hydrocarbures-eau, comprenant deux unités de séparation, la première unité de séparation étant une unité de séparation gravimétrique avec des plaques coalescentes pour séparer l'hydrocarbure libre d'un mélange hydrocarbure-eau, alors que la seconde unité de séparation est construite pour séparer l'hydrocarbure émulsionné, comportant une pompe aspirante pour le mélange eau-hydrocarbure à introduire, au moyen d'un tuyau, dans la cuve correspondante de l'unité de séparation gravimétrique ; **caractérisé en ce que** la séparation de l'hydrocarbure émulsionné est réalisée au moyen d'une unité de séparation (5) avec une membrane de briseur d'émulsion à écoulement transversal (6), qui génère des gouttes d'hydrocarbure à partir de gouttes émulsionnées qui entrent dans ladite membrane de briseur d'émulsion, sans qu'il soit nécessaire d'utiliser un quelconque produit chimique pour cette brisure d'émulsion ; un tuyau (11) étant prévu pour acheminer l'hydrocarbure séparé dans l'unité à membrane de briseur d'émulsion (5) jusqu'à l'unité de séparation gravimétrique (1), pourvu d'un réceptacle (12) sur son côté supérieur, où l'hydrocarbure arrive pour être rejeté plus tard, ledit hydrocarbure étant pompé par la pression fournie par la pompe aspirante (4) ; comprenant en outre une vanne automatique (17) pour que le fluide passe de l'unité de séparation gravimétrique (1) à l'unité à membrane de briseur d'émulsion (5), et de celle-ci, dans le tuyau de sortie (10) à travers le conduit (10'), tous deux d'eau sans hydrocarbures libres ou émulsionnés ; un système de rejet d'hydrocarbures étant également prévu, lequel est réalisé au moyen d'une vanne d'entrée d'eau propre sous pression (14) et d'un capteur de phase (13).

2. SÉPARATEUR PHYSICO-CHIMIQUE D'HYDROCARBURES ÉMULSIONNÉS-EAU POUR CALES DE NAVIRES, selon la revendication 1, est **caractérisé en ce que** la vanne d'entrée d'eau propre sous pression (14) peut être remplacée par une pompe d'extraction (16), qui est disposée dans le tuyau de sortie d'hydrocarbure respectif (15), à partir du réceptacle (12) situé sur le côté supérieur de la cuve (2), correspondant à l'unité de séparation gravimétrique (1).

3. SÉPARATEUR PHYSICO-CHIMIQUE D'HYDROCARBURES ÉMULSIONNÉS-EAU POUR CALES DE NAVIRES, selon les revendications précédentes, **caractérisé en ce qu'**une vanne automatique (18) a été disposée dans le tuyau de sortie pour l'eau sans hydrocarbures libres et sans hydrocarbures émulsionnés (10), au moyen de laquelle les rejets pollués dus à des défaillances dans l'équipement, sont conduits à travers le tuyau (20) jusqu'à un collecteur ou à une cuve (21) pour hydrocarbure-eau, pour être retraités sur la base de la lecture étant assurée par un mètre à hydrocarbure (9) dans l'eau.

4. SÉPARATEUR PHYSICO-CHIMIQUE D'HYDROCARBURES ÉMULSIONNÉS-EAU POUR CALES DE NAVIRES, selon les revendications précédentes, **caractérisé en ce qu'**une vanne automatique (17) a été disposée dans le tuyau de sortie (7) de l'unité de séparation gravimétrique (1) qui, en fonction de l'existence d'émulsions d'hydrocarbure dans l'eau, achemine le fluide jusqu'à l'unité de séparation (5) avec une membrane de briseur d'émulsion à écoulement transversal (6), ou achemine le fluide vers l'extérieur à travers le conduit pour l'eau sans hydrocarbures libres et sans hydrocarbures émulsionnés (10).
